# EUROPÄISCHE PATENTSCHRIFT

(11) **EP 3 696 147 B1**
(45) Veröffentlichungstag und Bekanntmachung des Hinweises auf die Patenterteilung: **31.03.2021**
(21) Anmeldenummer: 19157844.2
(22) Anmeldetag: 18.02.2019
(51) Int. Cl.: C03B 33/06, B29C 39/16, B26D 3/16

(54) **VERFAHREN UND VORRICHTUNG ZUM BEARBEITEN VON GLASROHRENDEN**
METHOD AND DEVICE FOR PROCESSING GLASS PIPE ENDS
DISPOSITIF ET PROCÉDÉ D'USINAGE D'EXTRÉMITÉS DE TUBES EN VERRE

(43) Veröffentlichungstag der Anmeldung: 19.08.2020
(73) Patentinhaber: Schott AG, 55122 Mainz (DE)
(72) Erfinder: VÖLKL, Franz, 95688 Friedenfels (DE); TRINKS, Volker, 95666 Mitterteich (DE)
(74) Vertreter: Mehler Achler

(56) Entgegenhaltungen:
- EP-A1- 2 808 308
- US-A1- 2018 215 649
- US-A1- 2018 305 238

## Beschreibung

Die Erfindung betrifft ein Verfahren und eine Vorrichtung zur Bearbeitung von Glasrohrenden.

Bei der Herstellung von Glasrohren werden Glasrohrrohlinge von einem kontinuierlich laufenden Endlosstrang aus Glas abgetrennt und in nachfolgende Bearbeitungsprozesse einzeln und teilungsgenau übergeben, wo sie dann weiterverarbeitet werden. Die einzelnen Systeme zur Bearbeitung der Glasrohrrohlinge sind hintereinander angeordnet und bilden so eine Bearbeitungslinie.

Während der Weiterverarbeitung werden die Enden der getrennten Rohre bearbeitet, wobei verschiedene Arten von Enden erzeugt werden können. Die Enden können beispielsweise offene oder geschlossene Enden sein. Die so erzeugten Rohre finden beispielsweise als Spezialglasrohre für Pharmaverpackungen Anwendung. Hierbei handelt es sich um Zwischenerzeugnisse für die Weiterverarbeitung zu Fläschchen, Ampullen, Spritzen, Karpulen und dergleichen. Gerade an solche Spezialglasrohre werden höchste Qualitätsanforderungen hinsichtlich der Sauberkeit und Maßhaltigkeit gestellt.

In bekannten Verfahren kühlen Glasrohrrohlinge, die vom Endlosstrang abgetrennt wurden, während der kontinuierlichen Förderung mittels einer Fördervorrichtung, langsam ab. Gleichzeitig werden Teilbereiche der Glasrohrrohlinge, insbesondere die Rohrendabschnitte, lokal durch thermische Bearbeitungsschritte erwärmt. Aus der DE 10 2010 017 731 A1 ist beispielsweise ein derartiges Verfahren bekannt.

Aus DE 102 00 144 B4 ist beispielsweise ein Verfahren zum Trennen eines Werkstoffes, insbesondere Glas, bekannt, bei dem der Werkstoff angeritzt und dann mit einem Laser bestrahlt wird. Der Laser hat dabei eine Wellenlänge in dem Bereich, in dem der Werkstoff die Strahlung absorbiert. Dadurch kann der Werkstoff die Energie des Lasers aufnehmen und sich erwärmen. Dies sorgt für Spannungen, welche den Werkstoff zertrennen. Auch aus der DE 42 14 159 C1 und der DE 44 44 547 C2 sind Trennverfahren mittels eines Lasers bekannt.

EP2808308 A1 bezieht sich auf eine Glasrohrschneidevorrichtung, die dazu ausgebildet ist, ein durch Rohrziehen gebildetes, sich kontinuierlich bewegendes kontinuierliches Glasrohr typischerweise unter Verwendung des Danner-Verfahrens auf eine vorbestimmte Länge zu schneiden.

Die einzelnen Schritte werden an bestimmten Positionen der Bearbeitungslinie durchgeführt, wobei die Positionen in Abhängigkeit von der Fördergeschwindigkeit jeweils einer Temperatur eines Glasrohrrohlings zugeordnet sind. Die Position einer Station, die einen Bearbeitungsschritt ausführen soll, wird so gewählt, dass die Temperatur der Glasrohrrohlinge auf ein Niveau abgekühlt ist, auf dem die weitere Bearbeitung durchgeführt werden kann. Beispielsweise können erst bei niedrigen Rohrtemperaturen Ritz- und Sprengprozesse durchgeführt werden. Das System, welches einen solchen Absprengprozess durchführt, muss also entsprechend weit hinten auf der Bearbeitungslinie positioniert sein. Durch die späten Ritz- und Sprengprozesse sowie den dazugehörigen Vorwärmprozess an den Trennstellen besteht zusätzlich die Gefahr der Kondenswasserbildung innerhalb des Glasrohrrohlings. Dabei kondensiert der Wasserdampf aus den Brennerabgasen an der Rohrinnenoberfläche, wodurch Ablagerungen an der Rohrinnenoberfläche entstehen. Dies beeinträchtigt die Qualität des herzustellenden Glasrohres und führt zum Ausfall des Produkts.

Ein weiteres Problem besteht darin, dass die Temperatur des Glasrohrrohlings an den einzelnen Stationen zur Bearbeitung im Wesentlichen von der Raumtemperatur und insbesondere von der Fördergeschwindigkeit der Fördereinrichtung für die Glasrohrrohlinge abhängt. Die Fördergeschwindigkeit wiederum wird durch die von der Glaswanne konstant gelieferte Glasmenge und den geometrischen Eigenschaften des zu fertigenden Produktes bestimmt.

Werden beispielsweise Glasrohre mit einem geringen Volumen und/oder geringer Wandstärke hergestellt, ist wenig Glas pro Glasrohr nötig und die Fördergeschwindigkeit ist hoch, um die hohe Anzahl der Glasrohrrohlinge abzutransportieren. Werden hingegen Glasrohre mit einem hohen Volumen und/oder hoher Wandstärke hergestellt, ist viel Glas pro Glasrohr nötig und die Fördergeschwindigkeit ist niedrig. Die Geometrie der herzustellenden Glasrohre beeinflusst damit direkt die Fördergeschwindigkeit der Glasrohrrohlinge und deren Temperatur an den einzelnen Systemen zur Bearbeitung. Unterschiedliche Geometrien haben damit unterschiedliche Temperaturen für die jeweiligen Bearbeitungsschritte zur Folge. Dies beeinträchtigt die Qualität, da nicht alle Glasrohrrohlinge mit der optimalen Temperatur bearbeitet werden können.

Der vorliegenden Erfindung liegt damit die Aufgabe zugrunde, ein verbessertes Verfahren und eine verbesserte Vorrichtung zur Bearbeitung von Glasrohrenden bereitzustellen.

Diese Aufgabe wird durch die Gegenstände des Hauptanspruchs und des nebengeordneten Anspruchs gelöst.

Die Erfindung betrifft in einem ersten Aspekt ein Verfahren zur Bearbeitung von Glasrohrenden, wobei das Verfahren die folgenden Schritte umfasst:
i. Bereitstellen eines Glasrohrrohlings, wobei der Glasrohrrohling mindestens zwei Rohrendabschnitte umfasst,
ii. Bearbeiten wenigstens eines der Rohrendabschnitte.

Nach dem Bereitstellen des Glasrohrrohlings und vor dem Bearbeiten des wenigstens einen Rohrendabschnitts wird der wenigstens eine Rohrendabschnitt mittels einer Kühlstation aktiv gekühlt.

Das Bereitstellen eines Glasrohrrohlings umfasst mindestens das geordnete Zuführen des vereinzelten Glasrohrrohlings zu den dem Vereinzeln nachfolgenden Bearbeitungsstationen und ist damit ein Teil des Herstellungsprozesses, bei dem dem Bereitsstellen ein Abziehen eines Glasrohrstranges (auch Endlosstrang genannt) aus einer Glasrohrherstellungsanlage sowie das Abtrennen des Glasrohrrohlings von dem Glasrohrstrang vorgeschaltet ist. Die Glasrohrrohlinge können während des Bereitstellens eine Temperatur in einem Temperaturbereich mit einer unteren Grenze von 150° C, insbesondere von 200° C und vorzugsweise 250° C, sowie einer oberen Grenze von 400° C, insbesondere von 350° C und vorzugsweise 300° C, aufweisen.

Das Bearbeiten eines Rohrendabschnitts umfasst beispielsweise ein Ritzen und Absprengen, um eine definierte Kante des Rohrendabschnitts zu erzeugen, ein Durchbohren des Rohrendabschnitts, um ein Druckausgleichsloch für das spätere Endprodukt zu schaffen, und/oder ein Verschließen des Rohrendabschnitts, um ein Glasrohr mit einem oder zwei geschlossenen Enden herzustellen.

Unter einem aktiven Kühlen wird ein Kühlen verstanden, bei dem ein Kühlmittel verwendet und, im Gegensatz zu einem passiven Kühlen, Energie aufgewendet wird.

Auch passives Kühlen kann unter Verwendung eines Kühlmittels erfolgen. Beispielsweise können Wärmetauscher zum Kühlen mit einem Kühlmittel gefüllt sein, welches Wärme durch Konvektion von den Rohrendabschnitten abtransportiert. Ein solches System würde keine eigene Energieversorgung benötigen, womit keine Energie aufgewandt werden müsste.

Das Kühlmittel kann insbesondere, ohne darauf beschränkt zu sein, Luft, Nebel oder ein spezielles Gasgemisch umfassen. Unter Nebel wird ein Gas, insbesondere Luft, verstanden, in dem Wassertröpfchen verteilt sind, die eine Tröpfchengröße von 20 µm nicht überschreiten. Bei der Verwendung von flüssigen Kühlmitteln, insbesondere von kryogenen Flüssigkeiten wie flüssigem Stickstoff, flüssigem CO₂ oder anderen flüssigen Gasen, ist die Kühlstation so positioniert, dass die Flüssigkeit vor Kontakt mit den Rohrendabschnitten vollständig verdampft. Ferner kann das Kühlmittel, insbesondere unter Aufwendung von Energie, vorgekühlt sein. Die Energie kann ferner dazu aufgewandt werden, das Kühlmittel zu bewegen, insbesondere in einem Kühlmittelkreislauf zirkulieren zu lassen oder als gerichteten Strom auf die Rohrendabschnitte zu leiten.

Durch das aktive Kühlen reduziert sich ferner die Strecke, die ein Glasrohrrohling in der Bearbeitungslinie zurücklegen muss, um die optimale Temperatur zu erreichen (im Folgenden als Kühlstrecke bezeichnet). Dadurch wird der benötigte Platz für eine Vorrichtung zum Ausführen eines Verfahrens zur Bearbeitung von Glasrohrenden reduziert. Die Reduzierung der Kühlstrecke und die aktive Kühlung bewirken ferner in vorteilhafter Weise eine Vermeidung der Bildung von Kondenswasser auf den Rohrinnenoberflächen, wodurch die Qualität der Bearbeitung weiter verbessert wird.

In einer Ausführungsform wird der wenigstens eine Rohrendabschnitt durch das aktive Kühlen auf eine vordefinierte Temperatur gekühlt. Die vordefinierte Temperatur ist vorzugsweise eine Temperatur zwischen 100° C und 120° C sein.

Durch das aktive Kühlen auf eine vordefinierte Temperatur des wenigstens einen Rohrendabschnitts wird sichergestellt, dass die optimale Temperatur für die jeweilige nachfolgende Bearbeitung des Rohrendes oder der Rohrenden erreicht wird. Weil die aktive Kühlung nur auf das oder die Rohrende(n) wirkt, bleibt die Kühlung weitgehend ohne Einfluss auf die Temperaturverhältnisse im übrigen Glasrohr. Insbesondere können so Kondensatbildung und schädliche Spannungen zwischen den Glasrohrenden vermieden und insgesamt eine höhere und gleichbleibende Qualität der Glasrohre für unterschiedliche Glasrohrgeometrien auf der gleichen Produktionsanlage sichergestellt werden.

Die vordefinierte Temperatur ist bedingt durch die nachfolgenden Bearbeitungsschritte. Die erforderliche Kühlleistung kann an verschiedene Einflussfaktoren angepasst sein. Zu diesen Einflussfaktoren zählen neben der Fördergeschwindigkeit auch die eingangsseitige Rohrtemperatur, das heißt die Temperatur des Glasrohrrohlings vor der Kühlstrecke, die Rohrgeometrie und Umgebungsparameter, wie zum Beispiel die Umgebungstemperatur und die Luftfeuchtigkeit.

Insbesondere kann dem aktiven Kühlen auf eine vordefinierte Temperatur deshalb ein Einstellen der Kühlleistung der Kühlstation vorausgehen, um die vordefinierte Temperatur zu erreichen. Die einzustellende Kühlleistung für eine bestimmte Temperatur ist zunächst von der zu entziehenden Wärmemenge und damit unter anderem von der vordefinierten Temperatur selbst, von der Geometrie der Glasrohrrohlinge, aber auch von der Fördergeschwindigkeit, insbesondere der Zeit, die ein Glasrohrrohling auf der Kühlstrecke verbringt, abhängig. Durch das Einstellen der Kühlleistung und das darauffolgende Kühlen auf die vordefinierte Temperatur kann das Kühlen an unterschiedliche Glasrohrgeometrien angepasst werden. Damit ist das Kühlen bis auf eine vordefinierte Temperatur von einem einfachen Kühlen ohne Zielvorgabe abzugrenzen.

In einer weiteren Ausführungsform verwendet die wenigstens eine Kühlstation für das aktive Kühlen einen gerichteten Kühlmittelstrom. Der Kühlmittelstrom ist beispielsweise, ohne darauf beschränkt zu sein, als Gasstrom, insbesondere als Luftstrom, Strom aus Stickstoff oder als Strom aus einem Nebel ausgebildet. Der Kühlmittelstrom kann beispielsweise mittels einer Düse so auf den wenigstens einen Rohrendabschnitt gerichtet sein, dass der Rohrendabschnitt entsprechend der Bedingungen für die weitere Bearbeitung gekühlt und beispielsweise die vordefinierte Temperatur erreicht wird.

In vorteilhafter Weise ist das Erzeugen eines Kühlmittelstroms, insbesondere eines Luftstroms, eine kostengünstige Möglichkeit, eine effektive Kühlung für ein Verfahren zur Bearbeitung von Glasrohrenden bereitzustellen. Ferner lässt sich eine Kühlung durch einen Kühlmittelstrom leicht steuern, indem beispielsweise der Mengenstrom des verwendeten Kühlmittels reguliert oder das Kühlmittel selbst unterschiedlich stark vorgekühlt wird.

In einer weiteren Ausführungsform umfasst das Verfahren nach dem Bereitstellen des Glasrohrrohlings folgende Schritte:
a) Erfassen der Temperatur des wenigstens einen Rohrendabschnitts mittels wenigstens eines Sensors,
b) Steuern der Kühlstation aufgrund der erfassten Temperatur des wenigstens einen Rohrendabschnitts.

Die Schritte a und b können vor dem, nach dem oder während des aktiven Kühlens des wenigstens einen Rohrendabschnitts einmal oder mehrfach oder in einer Regelschleife fortwährend ausgeführt werden. Der oder die Sensoren können zu diesem Zweck vor, hinter und/oder in der Kühlstation angeordnet sein.

In vorteilhafter Weise kann durch das Erfassen der Temperatur und das daran gekoppelte Steuern der Kühlstation die Temperatur des wenigstens einen Rohrendabschnitts präziser gesteuert oder an die Geometrie des herzustellenden Glasrohres angepasst werden. Sollte beispielsweise die Kühlstation einen nicht vorgekühlten Luftstrom für das aktive Kühlen verwenden und sich die Raumtemperatur ändern, beispielsweise weil eine Klimaanlage nicht richtig funktioniert oder sich das Wetter ändert, würde sich auch die Kühlleistung der Kühlstation ändern. Ein beispielsweise verminderter Kühleffekt kann durch den Sensor erfasst werden, worauf die Kühlstation angesteuert wird, die Kühlleistung zu erhöhen.

In einem weiteren Aspekt betrifft die Erfindung eine Vorrichtung zum Bearbeiten von Glasrohrenden, wobei die Vorrichtung eine Fördereinrichtung für Glasrohrrohlinge mit wenigstens zwei Rohrendabschnitten und wenigstens ein Bearbeitungssystem zum Bearbeiten wenigstens eines Rohrendabschnitts umfasst, wobei die Fördereinrichtung dazu ausgebildet ist, Glasrohrrohlinge quer in eine Förderrichtung zu transportieren, wobei das wenigstens eine Bearbeitungssystem senkrecht zur Förderrichtung neben der Fördereinrichtung positioniert ist, dadurch gekennzeichnet, dass in Förderrichtung vor dem wenigstens einen Bearbeitungssystem und senkrecht zur Förderrichtung neben der Fördereinrichtung wenigstens eine aktive Kühlstation positioniert ist.

Das wenigstens eine Bearbeitungssystem kann eines der oben genannten Systeme zur Bearbeitung von Glasrohrenden, insbesondere einen Gasbrenner, einen Laser oder ein anderes geeignetes System zum Ritzen des Rohrendabschnitts, eine Station zum Absprengen eines Teils des wenigstens einen Rohrendabschnitts, eine Lochstation und/oder eine Station zum Verschließen des Glasrohrs umfassen.

Die Fördereinrichtung kann insbesondere als Förderband ausgebildet sein. Die Fördereinrichtung erstreckt sich in eine Förderrichtung, in welche die Glasrohrrohlinge nach dem Abtrennen aus dem Endlosstrang transportiert werden. Die Glasrohrrohlinge besitzen eine Haupterstreckungsachse. Die Glasrohrrohlinge werden von der Fördereinrichtung quer, also senkrecht zu ihrer Haupterstreckungsachse, transportiert. Ferner werden die Glasrohrrohlinge vorzugsweise in einer horizontalen Lage transportiert und bearbeitet.

Die Vorrichtung umfasst wenigstens eine und vorzugsweise zwei aktive Kühlstationen, die in Förderrichtung an jeweils einem Ende des Glasrohrrohlings neben der Fördervorrichtung positioniert sind.

Die wenigstens eine aktive Kühlstation ist eine Vorrichtung, welche geeignet ist, mit einem Kühlmittel auf die Rohrendabschnitte der Glasrohrrohlinge einzuwirken. Eine aktive Kühlstation wendet, im Gegensatz zu einer passiven Kühlstation, wie beispielsweise einem Wärmetauscher, Energie auf, um eine Kühlwirkung zu erzielen.

Die wenigstens eine aktive Kühlstation ist neben der Fördereinrichtung positioniert, um die Rohrendabschnitte der Glasrohrrohlinge, die von der Förderrichtung transportiert werden, zu kühlen. Die Kühlstation ist insbesondere im Bereich der Rohrendabschnitte, also dem Bereich, durch den sich die Rohrendabschnitt bei der Beförderung hindurch bewegen, neben der Fördereinrichtung positioniert. Vorzugsweise ist die Kühlstation in einem Abstand von einigen Millimetern bis wenigen Zentimetern von dem Bereich der Rohrendabschnitte positioniert, sodass sichergestellt ist, dass die Kühlwirkung der Kühlstation die Rohrendabschnitte mit möglichst geringen Verlusten erreicht.

In einer weiteren Ausführungsform umfasst die wenigstens eine aktive Kühlstation eine Vorrichtung zum Erzeugen eines gerichteten Kühlmittelstroms.

Eine Vorrichtung zum Erzeugen eines gerichteten Kühlmittelstroms umfasst zumindest eine Kühlmittelzuführung und eine mit dieser verbundenen Düse. Die Kühlmittelzuführung kann beispielsweise mit einem Kompressor in Verbindung stehen, der seinerseits Bestandteil der Kühlstation ist. Der wenigstens eine Kompressor saugt Kühlmittel an und erzeugt so eine Druckdifferenz zwischen seiner Ansaugseite und seiner Auslassseite, die mit der Düse verbunden ist. Alternativ zu einem Kompressor können auch eine Pumpe, ein Verdichter oder ein ähnliches Gerät zum Bewegen von Fluiden verwendet werden. Alternativ kann vorverdichtetes Kühlmittel auch aus einem Netzwerk oder einem Reservoir bereitgestellt werden, an welches die Kühlmittelzuführung anschließbar ist.

An den Kompressor ist die wenigstens eine Düse fluidisch gekoppelt, sodass die erzeugte Druckdifferenz einen Kühlmittelstrom aus der Düse heraus bewirkt. Die Düse bestimmt durch ihre Form die Richtung und die Form des Kühlmittelstroms.

Vorzugsweise ist der Kühlmittelstrom mittels des Gebläses ausrichtbar. Das Gebläse kann insbesondere auf die Rohrendabschnitte der geförderten Glasrohrrohlinge ausgerichtet sein. Das bedeutet, dass die Düse so ausgebildet ist, dass der Kühlmittelstrom auf die Rohrendabschnitte trifft.

In einer weiteren bevorzugten Ausführungsform umfasst das Gebläse eine Schlitzdüse, wobei sich die Schlitzdüse parallel zur Förderrichtung erstreckt. Die Schlitzdüse kann insbesondere eine Länge von mehr als 0,05 Metern, insbesondere von mehr als 0,5 Metern, und weniger als zwei Metern aufweisen.

Unter einer Schlitzdüse wird eine Düse verstanden, die eine schlitzförmige Öffnung aufweist, aus welcher das Kühlmittel herausströmt. Die Form, die der Kühlmittelstrom dabei annimmt, entspricht einem flachen, in Förderrichtung ausgedehnten Strom.

In vorteilhafter Weise ist eine Schlitzdüse dazu geeignet, einen kontinuierlichen Kühlmittelstrom entlang ihrer Erstreckungsrichtung zu erzeugen, den die Glasrohrrohlinge im Betrieb der Vorrichtung mit konstanter Geschwindigkeit durchfahren. Durch den kontinuierlichen Kühlmittelstrom werden die Rohrendabschnitte gleichmäßig gekühlt, wodurch die Gefahr ungewollter thermischer Spannungen reduziert wird. Insbesondere bei einem kurzen und starken Kühlmittelstoß, kann im Vergleich zu einem kontinuierlichen und vergleichsweise langsamen Kühlen ein hoher Abkühlgradient erzeugt werden. Ein hoher Abkühlgradient hat wiederum unerwünschte lokale Spannungen im Glas zur Folge, welche durch das kontinuierliche Kühlen vermieden werden.

In einer weiteren Ausführungsform umfasst das Gebläse wenigstens zwei Düsen, wobei die wenigstens zwei Düsen auf einander gegenüberliegenden Seiten einer sich in Förderrichtung erstreckenden horizontalen Ebene angeordnet sind.

Werden die Glasrohrrohlinge entlang der Förderrichtung transportiert, bewegen sie sich parallel zu dieser Ebene. Die Rohrendabschnitte passieren auf diese Weise einen Bereich oberhalb und unterhalb dessen die wenigstens zwei Düsen angeordnet sind oder den die wenigstens zwei Düsen zumindest teilweise umgreifen. Die Rohrendabschnitte werden dadurch in vorteilhafter Weise von oben und von unten gleichmäßig gekühlt. Die wenigstens zwei Düsen können insbesondere jeweils als Schlitzdüsen ausgebildet sein, welche sich parallel zur Förderrichtung erstrecken.

Ferner kann das Gebläse auch drei oder mehr Düsen aufweisen, von denen wenigstens zwei Düsen wie vorstehend beschrieben auf einander gegenüberliegenden Seiten angeordnet sind und wenigstens eine Düse stirnseitig auf die Rohendabschnitte ausrichtbar ist.

Ferner kann das Gebläse im Seitenprofil, d.h. in oder entgegen der Förderrichtung blickend, ein u-förmiges Gehäuse aufweisen, wobei die Öffnung der u-Form in Richtung der Glasrohrrohlinge weist. Das u-förmige Gehäuse kann sich ferner parallel zur Förderrichtung erstrecken, wodurch das Gehäuse wie eine Rinne geformt ist, wobei sich die Rohrendabschnitte durch die Rinne bewegen. Die Innenseite des u-förmigen Gehäuse kann beispielsweise eine Vielzahl von Löchern aufweisen, die in einer oder mehreren Reihen und parallel zur Förderrichtung angeordnet sind. Alternativ oder zusätzlich kann das u-förmige Gehäuse auf der Innenseite eine oder mehrere schlitzförmige Öffnungen aufweisen, welche sich parallel zur Förderrichtung erstrecken. Durch die Löcher und/oder Öffnungen strömt das Kühlmittel. Die Löcher und/oder schlitzförmigen Öffnungen bilden dann also die Düsen.

Durch die Verteilung der Düsen und bzw. der die Düsen bildenden Löcher und/oder Öffnungen im Gebläse kann der Kühlmittelstrom auf die Rohrendabschnitte ausgerichtet werden, was eine gezielte und präzise Kühlung einzelner Teilbereiche der Rohrendabschnitte ermöglicht.

In einer weiteren Ausführungsform ist das Gebläse der wenigstens einen Kühlstation derart angeordnet, dass nur die Oberseiten der Rohrendabschnitte oder nur die Unterseiten der Rohrendabschnitte gekühlt werden.

In einer alternativen Ausführungsform umfasst das Gebläse wenigstens eine in Förderrichtung bewegbare Düse, wobei die Kühlstation einen Antrieb umfasst, der mit der wenigstens einen Düse gekoppelt und dazu konfiguriert ist, die wenigstens eine Düse in Förderrichtung und synchron mit der Fördereinrichtung zu bewegen.

Die zur Fördereinrichtung synchrone Bewegung der Düse bewirkt in vorteilhafter Weise, dass die Düse insbesondere mit derselben Fördergeschwindigkeit, bewegt wird, wie die Glasrohrrohlinge durch die Fördereinrichtung. Eine solche "mitlaufende" Düse kann während dem Kühlen genau einem Glasrohrrohling zugewiesen sein. Die Zuweisung einer Düse zu einem Glasrohrrohling in Verbindung mit der synchronen Bewegung zu diesem Glasrohrrohling ermöglicht ein gezieltes und präzises Kühlen eines Teilbereiches des wenigstens einen Rohrendabschnitts des Glasrohrrohlings. Insbesondere kann die Düse in dieser Ausführungsform auch innerhalb des Glasrohrrohlings platziert sein und den Rohrendabschnitt oder einen Teilbereich davon in vorteilhafter Weise von innen kühlen.

In einer weiteren Ausführungsform umfasst die Vorrichtung einen Sensor und eine Steuereinheit, wobei der Sensor, die Steuereinheit und die wenigstens eine Kühlstation kommunikativ miteinander verbunden sind, wobei der Sensor dazu ausgebildet ist, eine Temperatur zu erfassen und wobei die Steuereinheit dazu ausgebildet ist, die wenigstens eine Kühlstation in Abhängigkeit von der durch den Sensor erfassten Temperatur zu steuern.

Insbesondere ist der Sensor dazu ausgebildet, die Temperatur eines Rohrendabschnitts zu erfassen. Der Sensor kann insbesondere als Thermometer, als Infrarotsensor, als Heiß- oder Kaltleiter, berührend oder bevorzugt berührungslos messend ausgebildet sein. Ein berührungslos messender Sensor bietet ferner den Vorteil, dass der Glasrohrrohling nicht durch eine Berührung mit dem Sensor verunreinigt werden kann.

Die kommunikative Verbindung zwischen dem Sensor, der Steuereinheit und der Kühlstation kann als drahtgebundene oder drahtlose Verbindung, insbesondere als Funk- NFC- RFID-, WLAN-, optische, analoge oder optoelektronische Verbindung ausgebildet sein.

Die Steuereinheit kann insbesondere als PID-Regler, als Computer oder eine andere zur Datenverarbeitung geeignete Vorrichtung ausgebildet sein.

In vorteilhafter Weise bewirken der Sensor und die Steuereinheit, dass die Kühlstation auf sich ändernde Randbedingungen der Bearbeitungslinie, insbesondere eine sich ändernde Umgebungstemperatur reagieren kann, wodurch die Vorrichtung zur Bearbeitung von Glasrohrrohlingen in Bezug auf thermische Randbedingungen flexibler wird.

Der Sensor kann beispielsweise vor der wenigstens einen Kühlstation positioniert sein und eine Vorausbestimmung der Temperatur des noch zu kühlenden Rohrendabschnitts durchführen. In vorteilhafter Weise kann die Kühlleistung der wenigstens einen Kühlstation entsprechend der Temperatur des noch zu kühlenden Rohrendabschnitts angepasst werden. Hierdurch kann insbesondere eine Änderung der Raumtemperatur ausgeglichen werden.

Der Sensor kann ferner beispielsweise hinter der wenigstens einen Kühlstation positioniert sein und eine Nachbestimmung der Temperatur des bereits gekühlten Rohrendabschnitts durchführen. Dies erlaubt eine Regelung, die insbesondere eine Änderung der Kühlleistung der Kühlstation oder der Umgebungsbedingungen berücksichtigt.

In einer weiteren Ausführungsform umfasst die Vorrichtung eine Vielzahl an Sensoren. Die Sensoren können insbesondere vor und hinter der wenigstens einen Kühlstation positioniert sein und die Temperaturen einer Vielzahl von Rohrendabschnitten während dem Kühlen der Rohrendabschnitte erfassen. Dadurch kann ein Ist-Temperaturprofil der Rohrendabschnitte ermittelt werden, welches die Temperatur der zu kühlenden Rohrendabschnitte in Abhängigkeit von der Position auf der Bearbeitungslinie angibt. Das Ist-Temperaturprofil kann mit einem Soll-Temperaturprofil verglichen werden, welches für jede Position der Rohrendabschnitte auf der Bearbeitungslinie eine vordefinierte Temperatur angibt.

In vorteilhafter Weise kann die Steuereinheit die wenigstens eine Kühlstation auf jede Abweichung des Ist-Temperaturprofils von dem Soll-Temperaturprofil reagieren und die wenigstens eine Kühlstation entsprechend der Abweichung ansteuern.

In einer weiteren Ausführungsform umfassen die wenigstens eine aktive Kühlstation ein Kühlaggregat und das Gebläse eine Kühlmittelleitung, wobei das Kühlaggregat an der Kühlmittelleitung angeordnet ist. Die Kühlmittelleitung verläuft in dieser Ausführungsform von dem Kompressor oder Verdichter zu der wenigstes einen Düse des Gebläses.

In vorteilhafter Weise kann das Kühlaggregat das Kühlmittel innerhalb der Kühlmittelleitung kühlen und somit die Kühlleistung der Kühlstation erhöhen.

Im Folgenden werden einzelne Ausführungsbeispiele dargestellt:
- Figur 1: zeigt eine schematische Ansicht einer Vorrichtung zur Bearbeitung von Glasrohrenden, wie sie aus dem Stand der Technik bekannt ist,
- Figur 2: zeigt eine schematische Ansicht einer Vorrichtung zur Bearbeitung von Glasrohrenden mit wenigstens einer Kühlstation,
- Figur 3: zeigt ein erstes Gebläse mit einer Düse im Seitenprofil,
- Figur 4: zeigt ein zweites Gebläse mit einer Düse im Seitenprofil,
- Figur 5: zeigt ein drittes Gebläse mit zwei Düsen im Seitenprofil,
- Figur 6: zeigt ein viertes Gebläse mit einer U-förmigen Düsenanordnung im Seitenprofil,
- Figur 7: zeigt ein fünftes Gebläse mit einer mitlaufenden Düse im Seitenprofil,
- Figur 8: zeigt einen Schnitt einer Ausführungsform der Kühlstation,
- Figur 9: zeigt das Schaubild eines Verfahrens zur Bearbeitung von Glasrohrenden, und
- Figur 10: zeigt das Schaubild einer weiteren Ausführungsform eines Verfahrens zur Bearbeitung von Glasrohrenden.

Im Folgenden beziehen sich die Richtungsangaben "links" und "rechts" auf "in Förderrichtung links" und "in Förderrichtung rechts".

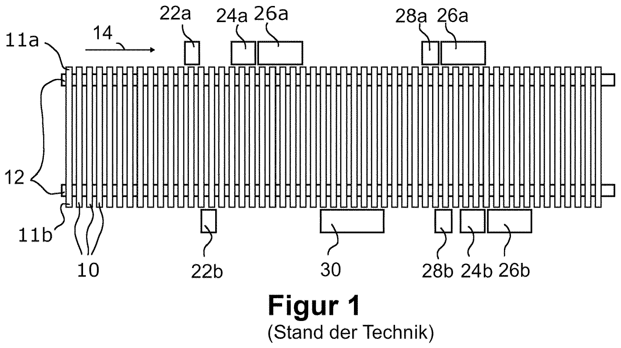

Figur 1 zeigt eine schematische Ansicht von oben auf eine Vorrichtung zur Bearbeitung von Glasrohrenden, wie sie aus dem Stand der Technik bekannt ist. Die Bearbeitung beginnt mit dem Bereitstellen von Glasrohrrohlingen 10 mit wenigstens zwei Rohrendabschnitten 11a und 11b. Die Glasrohrrohlinge 10 haben bei der Bereitstellung eine Temperatur in einem Temperaturbereich mit einer unteren Grenze von 150° C, insbesondere von 200° C und vorzugsweise 250° C, sowie einer oberen Grenze von 400° C, insbesondere von 350° C und vorzugsweise 300° C. Die Glasrohrrohlinge 10 werden mit einer Fördereinrichtung 12 quer in eine Förderrichtung 14 transportiert. "Quer" bedeutet dabei, dass sich die Glasrohrrohlinge 10 senkrecht oder im Wesentlichen senkrecht zu einer Förderrichtung 14 erstrecken. Die Förderrichtung 14 ist durch die Fördereinrichtung 12 bestimmt. Die Rohrendabschnitte 11a und 11b der Glasrohrrohlinge 10 ragen bei der Beförderung durch die Fördereinrichtung 12 links und rechts über die Fördereinrichtung 12 hinaus, sodass die Rohrendabschnitte 11a und 11b von den nachfolgenden Bearbeitungsstationen bearbeitet werden können.

Die dargestellte Vorrichtung ist in der Lage unterschiedliche Typen von Glasrohren in einer Bearbeitungslinie zu bearbeiten. Darunter fallen verschlossene Glasrohre, deren Rohrendabschnitte beide verschlossen sind, halb geschlossene Glasrohre, bei denen nur ein Rohrendabschnitt verschlossen ist und offene Glasrohre, bei denen beide Rohrendabschnitte unverschlossen sind. Je nachdem, welcher Glasrohrtyp hergestellt wird, kommen unterschiedliche Stationen zum Einsatz.

In einem ersten beispielhaften Bearbeitungsschritt werden von den Rohrendabschnitten links 11a und rechts 11b verunreinigende oder überschüssige Partikel entfernt. Dies erfolgt durch die Stationen für die Partikelentfernung links 22a und rechts 22b.

Nach den Stationen für die Partikelentfernung 22a und 22b ist in einem relativ zur Gesamtlänge der Bearbeitungslinie kurzen Abstand eine Station für das Verschließen 24a der linken Rohrendabschnitte 11a positioniert. Generell muss das Material zum Verschließen der Rohrendabschnitte weich und formbar sein. Daher bietet es sich an, die Station für das Verschließen 24a ziemlich zu Anfang der Bearbeitungslinie, also nicht weit nach der Station 22a für die Partikelentfernung anzuordnen.

Anders sieht das bei der Station für das Verschließen 24b der rechten Rohrendabschnitte 11b aus. Werden auch die Rohrendabschnitte rechts 11b verschlossen, müssen die rechten Rohrendabschnitte 11b nämlich zunächst mit einem Loch für einen Druckausgleich versehen werden. Das Lochen der rechten Rohrendabschnitte 11b erfolgt durch eine Lochstation 30. Da die exakte Position des Lochs auf den Glasrohrrohlingen 10 von einer Soll-Länge oder Nutzlänge der fertigen Glasrohre abhängt, kann die Lochstation 30 in Förderrichtung 14 erst hinter der Brennerstation 26a positioniert sein, die auf die Station für das Verschließen 24a auf der linken Seite folgt. So ist die Position des Lochs in dem Glasrohrrohling in einem definierten Abstand zur bereits fertiggestellten linken Rohrseite sichergestellt. Ferner muss die Temperatur der Glasrohrrohlinge 10, insbesondere der rechten Rohrendabschnitte 11b für die Bearbeitung durch die Lochstation 30 hinreichend abgekühlt sein, sodass die Lochstation 30 in der Bearbeitungslinie weiter hinten positioniert ist.

Hinter der Lochstation 30 ist dann auf der rechten Seite eine weitere Station für das Verschließen 24b vorgesehen, welche die rechten Rohrendabschnitte 11b verschließt.

Für die thermische Nachbearbeitung der verschlossenen Rohrendabschnitte 11a zwecks Entspannung bzw. Spannungsvermeidung des Glases ist in Förderrichtung 14 jeweils unmittelbar hinter den Stationen für das Verschließen 24a und 24b eine Brennerstation 26a bzw. 26b positioniert.

Auch bei Glasrohren mit einem oder zwei offenen Rohrenden, werden die Rohrendabschnitte 11a und/oder 11b nachbearbeitet. Diese Nachbearbeitung kann beispielsweise ein Ritzen und Sprengen der Rohrenden beinhalten, um eine definierte Länge und einen sauberen Abschluss zu erlangen. Dafür sind auf der linken und auf der rechten Seite die Stationen für das Ritzen und Sprengen 28a und 28b vorgesehen. Die Stationen für das Ritzen und Sprengen 28a und 28b sind weit hinten in der Bearbeitungslinie positioniert, damit die Glasrohrrohlinge 10 bis dorthin auf eine für diese Bearbeitung optimale Temperatur von weniger als 120° C abgekühlt sind. Auch im Anschluss an die Stationen für das Ritzen und Sprengen 28a und 28b sind jeweils wieder Brennerstationen 26a und 26b positioniert, wobei die Brennerstation 26b sich genau genommen an die Station für das Verschließen 24b anschließt, weil der Abstand zwischen dieser und der Station für das Ritzen und Sprengen 28b vergleichsweise gering ist, so dass eine Brennerstation für die thermische Nachbearbeitung beider Bearbeitungsschritte genutzt werden kann. Die Brennerstationen 26a und 26b erhitzen die gesprengten Rohrendabschnitte 11a und 11b erneut, um die Kante, welche durch das Sprengen entstanden ist, zu glätten und ungewollte Spannungen in dem Glas zu vermeiden.

Wie schon angemerkt, kommen bei einem Produkt nicht alle Bearbeitungsstationen zum Einsatz. Die Vorrichtung gemäß Figur 1 ist daher für die Herstellung verschiedener Produkte ausgelegt. Soll eine Anlage für ein stets gleichbleibendes Produkt konzipiert sein, kann die Vorrichtung beispielsweise auch nur eine Seite der Bearbeitungslinie, also beispielsweise nur die linke oder nur die rechte Seite, umfassen. Ferner kann die Vorrichtung auch nur die Stationen für das Verschließen 24a und/oder 24b oder die Stationen für das Ritzen und Sprengen 28a und/oder 28b umfassen.

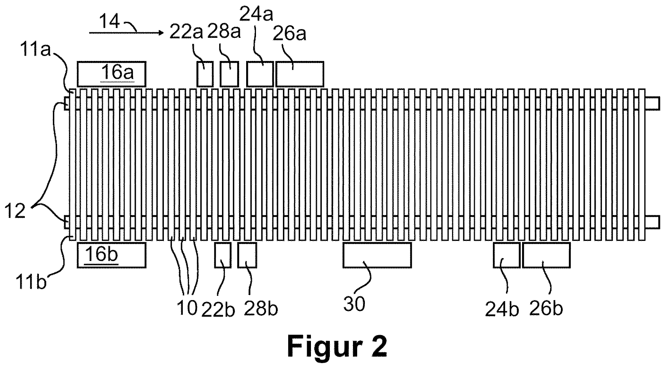

Figur 2 zeigt eine schematische Ansicht von oben auf eine Ausführungsform einer erfindungsgemäßen Vorrichtung zur Bearbeitung von Glasrohrenden, welche zusätzlich zu den Bearbeitungsstationen aus Figur 1 ferner zwei Kühlstationen 16a und 16b umfasst. In der dargestellten Ausführungsform umfasst die Vorrichtung eine Kühlstation 16a auf der linken Seite und eine Kühlstation 16b auf der rechten Seite der Vorrichtung.

Die Kühlstationen 16a und 16b sind zu Beginn der Bearbeitungslinie positioniert. Dadurch können die Kühlstationen 16a und 16b die Rohrendabschnitte 11a und 11b direkt nach dem Bereitstellen der Glasrohrrohlinge 10 kühlen. Das Kühlen der Rohrendabschnitte 11a und 11b durch die Kühlstationen 16a und 16b bewirkt daher nicht nur, dass die Temperatur für die Bearbeitung der Rohrendabschnitte 11a und 11b auf ein gleichbleibendes Niveau geregelt wird. Insbesondere beschleunigt das aktive Kühlen den Kühlprozess gegenüber einem passiven Auskühlen der Rohrendabschnitte 11a und 11b an der Luft, wie es bei einer Vorrichtung ohne Kühlstation gemäß Figur 1 der Fall ist. Dadurch verkürzt sich die Strecke zwischen dem Beginn der Bearbeitungslinie und den ersten Bearbeitungsstationen, welche hier die Stationen für die Partikelentfernung 22a und 22b sind. Insbesondere können die Stationen für das Ritzen und Sprengen 28a und 28b vorgezogen werden, da die optimale Temperatur hierfür von unter 120° C schneller erreicht wird.

Für Vorrichtungen ohne Stationen für das Verschließen 24a und/oder 24b kann, gegenüber einer Vorrichtung ohne Kühlstationen 16a und 16b, durch das Verwenden der Kühlstationen 16a und/oder 16b eine Strecke von ca. 2m oder ca. 10% der Länge der Bearbeitungslinie eingespart werden.

Ferner kann bei Vorrichtungen, die sowohl eine Station für das Ritzen und Sprengen 28a, als auch eine Station für das Verschließen 24a, umfassen, die Anzahl der Brennerstationen 26a reduziert werden. Während die in Figur 1 gezeigte Vorrichtung zwei Brennerstationen 26a für die thermische Nachbearbeitung der verschlossenen Rohrendabschnitte 11a einerseits und die thermische Nachbearbeitung der in der Station 28a abgelängten Glasrohre andererseits benötigt, kann durch das Vorziehen der Station für das Ritzen und Sprengen 28a der Abstand zwischen dieser und der Station für das Verschließen 24a so weit reduziert werden, dass eine Brennerstation 26a für die thermische Nachbearbeitung für beide Bearbeitungsschritte 28a und 24a genutzt werden kann. Die erfindungsgemäße Vorrichtung ist demgemäß vorzugsweise dadurch weitergebildet, dass das Bearbeitungssystem eine Station für das Ritzen und Sprengen 28a und eine Station für das Verschließen24a aufweist, wobei sich an die Station für das Ritzen und Sprengen 28a und die Station für das Verschließen24a nur genau eine Brennerstation 26a für eine thermische Nachbearbeitung anschließt.

In alternativen Ausführungsformen kann die Vorrichtung anstelle zweier Kühlstation 16a oder 16b auch nur eine auf der rechten oder linken Seite umfassen.

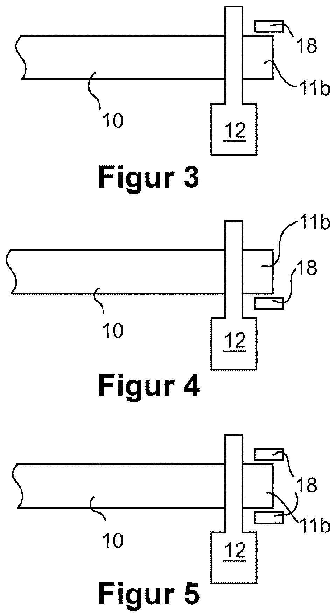

Figur 3 zeigt einen Teil eines Glasrohrrohlings 10 mit dem rechten Rohrendabschnitt 11b in einer Ansicht in Förderrichtung 14. Eine Düse 18 der Kühlstation 16b (hier nicht weiter dargestellt), welche beispielsweise als Schlitzdüse ausgebildet ist, ist hier abstrahiert über dem Rohrendabschnitt 11b positioniert dargestellt. In dieser Ausführungsform kühlt die Düse 18 den Rohrendabschnitt 11b von oben.

Figur 4 zeigt eine ähnliche Anordnung wie Figur 3. Die Anordnung der Figur 4 unterscheidet sich dadurch von der Anordnung in Figur 3, dass die Düse 18 (schematisch) unter dem Rohrendabschnitt 11b angeordnet ist. In dieser Ausführungsform kühlt die Düse 18 den Rohrendabschnitt 11b von unten.

Figur 5 zeigt eine Kombination der Anordnungen aus den Figuren 3 und 4. Die hier gezeigten Düsen 18 sind ebenfalls Teil einer Kühlstation 16b (hier nicht weiter dargestellt) und umgreifen den Rohrendabschnitt 11b von zwei Seiten, also zumindest teilweise, wodurch der obere und der untere Teilbereich des Rohrendabschnitts 11b gleichzeitig gekühlt werden.

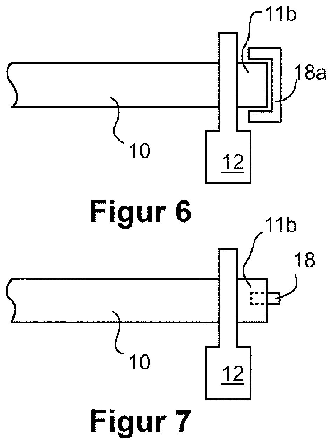

Figur 6 zeigt eine weitere Ausführungsform der Anordnung von Düsen um den Rohrendabschnitt 11b des Glasrohrrohlings 10 herum. In dieser Ausführungsform umgreift ein Gehäuse 18a den Rohrendabschnitt 11b auf drei Seiten, sodass der Rohrendabschnitt 11b von oben, von unten und von der Seite gekühlt werden kann. Die Düsen sind zu diesem Zweck in dem u-förmigen Gehäuse 18a auf der Innenseite als eine Mehrzahl von Löchern (Bohrungen, Langlöcher, Schlitze etc.) ausgebildet, durch die ein Kühlmittelstrom, insbesondere ein Luftstrom, auf den Rohrendabschnitt 11b aus mehreren Richtungen gerichtet wird. In dieser Ausführungsform kann der Rohrendabschnitt 11b in besonders vorteilhafter Weise gleichmäßig gekühlt werden.

Figur 7 zeigt eine weitere Anordnung der Düse 18 im Verhältnis zu dem Rohrendabschnitt 11b des Glasrohrrohlings 10. Die Düse 18 ist in dieser Ausführungsform in den Glasrohrrohling 10 zumindest teilweise eingeführt und kann den Rohrendabschnitt 11b von Innen kühlen. In dieser Ausführungsform muss zumindest die Düse 18 in Förderrichtung beweglich ausgestaltet sein, sodass sich die Düse 18 synchron mit dem Glasrohrrohling 10 mitbewegen kann.

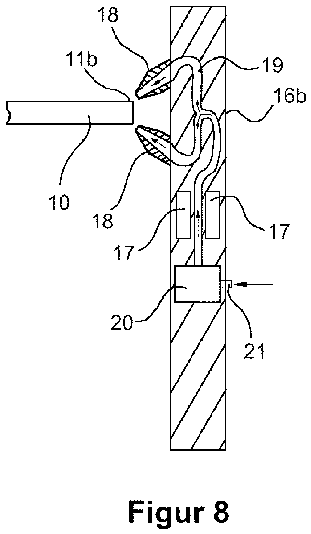

Figur 8 zeigt einen Schnitt in der Seitenansicht, d.h. mit Blickrichtung in oder entgegen der Förderrichtung, einer Ausführungsform der Kühlstation 16b. Die Kühlstation 16b umfasst in der dargestellten Ausführungsform einen Kompressor 20, welcher ein Kühlmittel, vorzugsweise Luft, durch ein Ansaugrohr 21 ansaugt und verdichtet. Das Kühlmittel wird dann von dem Kompressor 20 durch eine Kühlmittelleitung 19 gedrückt, wobei ein Kühlmittelstrom entsteht.

Die Kühlstation 16b umfasst ferner zwei Düsen 18, welche ober- bzw. unterhalb des Rohrendabschnitts 11b angeordnet sind. Die Düsen 18 sind fluidisch mit dem Kompressor 20 über die Kühlmittelleitung 19 verbunden. Die Düsen 18 und der Kompressor 20 bilden zusammen eine Einheit, welche als Gebläse bezeichnet wird. Die Düsen 18 sind ferner so angeordnet, dass sie den Kühlmittelstrom auf den Rohrendabschnitt 11b richten.

Die Kühlstation 16b umfasst ferner ein Kühlaggregat 17, durch welches die Kühlmittelleitung 19 hindurchgelegt ist. Das Kühlaggregat 17 kühlt das Kühlmittel innerhalb der Kühlmittelleitung 19, während das Kühlmittel durch das Kühlaggregat 17 hindurch fließt. Dadurch wird ein Kühlmittelstrom aus einem vorgekühlten Kühlmittel erzeugt.

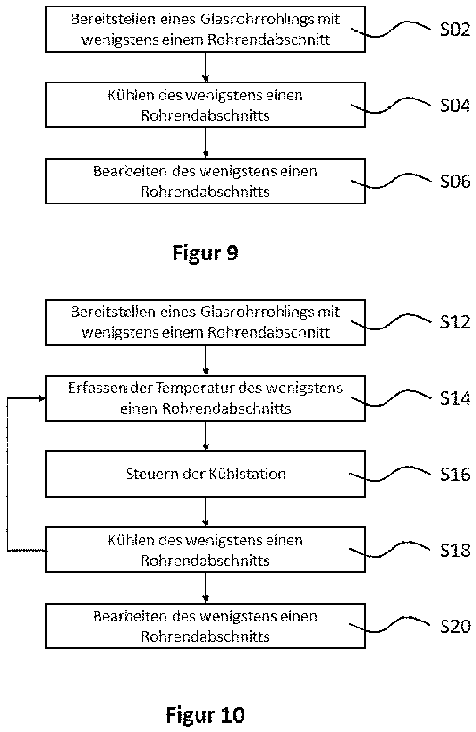

Figur 9 veranschaulicht das erfindungsgemäße Verfahren gemäß einer ersten Ausführungsform zur Bearbeitung von Glasrohrenden als Ablaufdiagramm. Das Verfahren beginnt mit Schritt S02, bei dem ein Glasrohrrohling mit wenigstens einem Rohrendabschnitt bereitgestellt wird. Während der Glasrohrrohling von einer Fördereinrichtung in eine Förderrichtung transportiert wird, durchläuft der Glasrohrrohling verschiedene Prozesse. Nach dem Bereitstellen passiert der Glasrohrrohling eine Kühlstation, welche den wenigstens einen Rohrendabschnitt des Glasrohrrohlings in Schritt S04 kühlt. Anschließend wird der Glasrohrrohling zu verschiedenen Bearbeitungsstationen transportiert, wo der wenigstens eine Rohrendabschnitt in einem letzten Schritt S06 weiter bearbeitet wird.

Figur 10 veranschaulicht eine alternative Variante des erfindungsgemäßen Verfahrens aus Figur 9 als Ablaufdiagramm. Auch diese Variante beginnt mit dem Bereitstellen eines Glasrohrrohlings mit wenigstens einem Rohrendabschnitt in Schritt S12. Als nächstes wird zunächst die Temperatur des wenigstens einen Rohrendabschnitts mittels eines ersten Sensors in Schritt S14 erfasst. Dabei können insbesondere der Mittelwert der Rohrendtemperaturen erfasst und die Kühlleistung an die erfasste Temperatur in Schritt S16 angepasst werden. Die Änderungen der Kühlleistung können sich während des Kühlens in Schritt S18 auf mehrere Rohrendabschnitte, die sich gerade im Bereich der Kühlstation befinden, auswirken.

Bringt man einen zusätzlichen Sensor zur Kontrolle der Ausgangstemperatur der Rohrenden nach der Kühlstrecke an, kehrt das Verfahren zu Schritt S14 zurück. Auswirkungen der Rohrgeometrie oder der Wärmeübergänge auf die Rohrenden während der Kühlung können dadurch in die Regelung der Kühlleistung mit einbezogen und die Kühlleistung entsprechend angepasst werden.

In einer weiteren Ausführungsform kann die Kühlstrecke in mehrere hintereinander folgende Kaskaden unterteilt werden, die jeweils einen Sensor, eine Kühlstrecke und eine Regelung umfassen. Die Kühlung und damit die Temperaturgenauigkeit der ausgangsseitigen Temperatur der Rohrendabschnitt kann mit zunehmender Anzahl der Kaskaden noch weiter optimiert werden.

Alternativ können ein mitlaufender Temperatursensor und ein mitlaufendes Kühlmodul je Rohrendabschnitt für die Kühlung verwendet werden. Die Temperatur jedes einzelnen Rohrendabschnitts wird in dieser Ausführungsform kontinuierlich gemessen. Die Kühlung kann dadurch so geregelt werden, dass die gewünschte Zieltemperatur des jeweiligen Rohrendabschnitts am Ausgang der Kühlstrecke optimal erreicht wird.

In jedem Fall folgt schließlich der Schritt S20, indem der wenigstens eine Rohrendabschnitt bearbeitet wird.

### Bezugszeichenliste

- 10: Glasrohrrohling
- 11a: Rohrendabschnitt
- 11b: Rohrendabschnitt
- 12: Fördereinrichtung
- 14: Förderrichtung
- 16a: Kühlstation
- 16b: Kühlstation
- 17: Kühlaggregat
- 18: Düse
- 18a: Gehäuse
- 19: Kühlmittelleitung
- 20: Kompressor
- 21: Ansaugrohr
- 22a: Station für die Partikelentfernung
- 22b: Station für die Partikelentfernung
- 24a: Station für das Verschließen
- 24b: Station für das Verschließen
- 26a: Brennerstation
- 26b: Brennerstation
- 28a: Station für das Ritzen und Sprengen
- 28b: Station für das Ritzen und Sprengen
- 30: Loch-Station
- S02: Schritt des Bereitstellens
- S04: Schritt des Kühlens
- S06: Schritt des Bearbeitens
- S12: Schritt des Bereitstellens
- S14: Schritt des Erfassens
- S16: Schritt des Steuerns
- S18: Schritt des Kühlens
- S20: Schritt des Bearbeitens

## Patentansprüche

1. Verfahren zur Bearbeitung von Glasrohrenden, wobei das Verfahren die folgenden Schritte umfasst:
i. Bereitstellen eines Glasrohrrohlings (10), wobei der Glasrohrrohling (10) mindestens zwei Rohrendabschnitte (11a, 11b) umfasst,
ii. Bearbeiten wenigstens eines der Rohrendabschnitte (11a, 11b),
**dadurch gekennzeichnet, dass** nach dem Bereitstellen des Glasrohrrohlings (10) und vor dem Bearbeiten des wenigstens einen Rohrendabschnitts (11a, 11b) der wenigstens eine Rohrendabschnitt (11a, 11b) mittels einer Kühlstation (16a, 16b) aktiv gekühlt wird.

2. Verfahren nach Anspruch 1, **dadurch gekennzeichnet,**
**dass** der wenigstens eine Rohrendabschnitt (11a, 11b) durch das aktive Kühlen auf eine vordefinierte Temperatur gekühlt wird.

3. Verfahren nach einem der vorherigen Ansprüche, **dadurch gekennzeichnet,**
**dass** die wenigstens eine Kühlstation (16a, 16b) für das aktive Kühlen einen gerichteten Kühlmittelstrom verwendet.

4. Verfahren nach einem der vorherigen Ansprüche, **dadurch gekennzeichnet,**
**dass** das Verfahren nach dem Bereitstellen des Glasrohrrohlings (10) folgende Schritte umfasst:
a) Erfassen der Temperatur des wenigstens einen Rohrendabschnitts (11a, 11b) mittels eines Sensors,
b) Steuern der Kühlstation (16a, 16b) aufgrund der erfassten Temperatur des wenigstens einen Rohrendabschnitts (11a, 11b).

5. Vorrichtung zum Bearbeiten von Glasrohrenden, wobei die Vorrichtung eine Fördereinrichtung (12) für Glasrohrrohlinge (10) mit wenigstens zwei Rohrendabschnitten (11a, 11b) und wenigstens ein Bearbeitungssystem (24a, 24b, 26a, 26b, 28a, 28b, 30) zum Bearbeiten wenigstens eines Rohrendabschnitts (11a, 11b) umfasst,
wobei die Fördereinrichtung (12) dazu ausgebildet ist, Glasrohrrohlinge (10) quer in eine Förderrichtung (14) zu transportieren,
wobei das wenigstens eine Bearbeitungssystem (24a, 24b, 26a, 26b, 28a, 28b, 30) senkrecht zur Förderrichtung (14) neben der Fördereinrichtung (12) positioniert ist, **dadurch gekennzeichnet,**
**dass** in Förderrichtung (14) vor dem wenigstens einen Bearbeitungssystem (24a, 24b, 26a, 26b, 28a, 28b, 30) und senkrecht zur Förderrichtung (14) neben der Fördereinrichtung (12) wenigstens eine aktive Kühlstation (16a,16b) positioniert ist.

6. Vorrichtung nach Anspruch 5, **dadurch gekennzeichnet,**
**dass** die wenigstens eine aktive Kühlstation (16a, 16b) eine Vorrichtung zum Erzeugen eines gerichteten Kühlmittelstroms umfasst.

7. Vorrichtung nach Anspruch 6, **dadurch gekennzeichnet,**
**dass** das Gebläse eine Schlitzdüse umfasst, wobei sich die Schlitzdüse parallel zur Förderrichtung (14) erstreckt.

8. Vorrichtung nach Anspruch 6, **dadurch gekennzeichnet,**
**dass** das Gebläse wenigstens zwei Düsen (18) umfasst, wobei die wenigstens zwei Düsen (18) auf einander gegenüberliegenden Seiten einer sich in Förderrichtung erstreckenden horizontalen Ebene angeordnet sind.

9. Vorrichtung nach Anspruch 6, **dadurch gekennzeichnet,**
**dass** das Gebläse wenigstens eine in Förderrichtung (14) bewegbare Düse (18) umfasst, wobei die Kühlstation (16a, 16b) einen Antrieb umfasst, der mit der wenigstens einen Düse (18) gekoppelt und dazu konfiguriert ist, die wenigstens eine Düse (18) in Förderrichtung (14) und synchron mit der Fördereinrichtung (12) zu bewegen.

10. Vorrichtung nach einem der Ansprüche 5 bis 9, **dadurch gekennzeichnet,**
**dass** die Vorrichtung einen Sensor und eine Steuereinheit umfasst, wobei der Sensor, die Steuereinheit und die wenigstens eine Kühlstation (16a, 16b) kommunikativ miteinander verbunden sind,
wobei der Sensor dazu ausgebildet ist eine Temperatur zu erfassen und wobei die Steuereinheit dazu ausgebildet ist, die wenigstens eine Kühlstation (16a, 16b) in Abhängigkeit von der durch den Sensor erfassten Temperatur zu steuern.

11. Vorrichtung nach einem der Ansprüche 5 bis 10, **dadurch gekennzeichnet,**
**dass** das Bearbeitungssystem eine Station für das Ritzen und Sprengen 28a und eine Station für das Verschließen 24a aufweist, wobei sich an die Station für das Ritzen und Sprengen 28a und die Station für das Verschließen 24a nur genau eine Brennerstation 26a für eine thermische Nachbearbeitung anschließt.

## Claims

1. Method for processing glass tube ends, wherein the method comprises the following steps:
i. providing a glass tube blank (10), wherein the glass tube blank (10) comprises at least two tube end portions (11a, 11b),
ii. processing at least one of the tube end portions (11a, 11b),
**characterized in that**, after providing the glass tube blank (10) and before processing the at least one tube end portion (11a, 11b), the at least one tube end portion (11a, 11b) is actively cooled by means of a cooling station (16a, 16b).

2. Method according to Claim 1, **characterized**
**in that** the at least one tube end portion (11a, 11b) is cooled to a predefined temperature by the active cooling.

3. Method according to one of the preceding claims, **characterized**
**in that** the at least one cooling station (16a, 16b) uses a directed coolant flow for the active cooling.

4. Method according to one of the preceding claims, **characterized**
**in that**, after providing the glass tube blank (10), the method comprises the following steps:
a) detecting the temperature of the at least one tube end portion (11a, 11b) by means of a sensor,
b) controlling the cooling station (16a, 16b) on the basis of the detected temperature of the at least one tube end portion (11a, 11b).

5. Apparatus for processing glass tube ends, wherein the apparatus comprises a conveying device (12) for glass tube blanks (10) having at least two tube end portions (11a, 11b), and at least one processing system (24a, 24b, 26a, 26b, 28a, 28b, 30) for processing at least one tube end portion (11a, 11b),
wherein the conveying device (12) is designed to transport glass tube blanks (10) transversely in a conveying direction (14),
wherein the at least one processing system (24a, 24b, 26a, 26b, 28a, 28b, 30) is positioned next to the conveying device (12) perpendicularly to the conveying direction (14), **characterized**
**in that** at least one active cooling station (16a,16b) is positioned next to the conveying device (12) in the conveying direction (14) upstream of the at least one processing system (24a, 24b, 26a, 26b, 28a, 28b, 30) and perpendicularly to the conveying direction (14).

6. Apparatus according to Claim 5, **characterized in that** the at least one active cooling station (16a, 16b) comprises an apparatus for generating a directed coolant flow.

7. Apparatus according to Claim 6, **characterized in that** the blower comprises a slotted nozzle, wherein the slotted nozzle extends parallel to the conveying direction (14).

8. Apparatus according to Claim 6, **characterized in that** the blower comprises at least two nozzles (18), wherein the at least two nozzles (18) are arranged on mutually opposite sides of a horizontal plane extending in the conveying direction.

9. Apparatus according to Claim 6, **characterized in that** the blower comprises at least one nozzle (18) which can be moved in the conveying direction (14), wherein the cooling station (16a, 16b) comprises a drive which is coupled to the at least one nozzle (18) and is configured to move the at least one nozzle (18) in the conveying direction (14) and synchronously with the conveying device (12).

10. Apparatus according to one of Claims 5 to 9, **characterized**
**in that** the apparatus comprises a sensor and a control unit, wherein the sensor, the control unit and the at least one cooling station (16a, 16b) are communicatively connected to one another,
wherein the sensor is designed to detect a temperature and wherein the control unit is designed to control the at least one cooling station (16a, 16b) in dependence on the temperature detected by the sensor.

11. Apparatus according to one of Claims 5 to 10, **characterized**
**in that** the processing system has a station 28a for scoring and rupturing and a station 24a for closing, wherein the station 28a for scoring and rupturing and the station 24a for closing are adjoined by only exactly one burner station 26a for thermal post-processing.

## Revendications

1. Procédé pour l'usinage d'extrémités de tubes en verre, le procédé comprenant les étapes suivantes :
i. la préparation d'une ébauche de tube en verre (10), l'ébauche de tube en verre (10) comprenant au moins deux sections d'extrémité de tube (11a, 11b),
ii. l'usinage d'au moins une des sections d'extrémité de tube (11a, 11b),
**caractérisé en ce qu'**après la préparation de l'ébauche de tube en verre (10) et avant l'usinage de ladite au moins une section d'extrémité de tube (11a, 11b), ladite au moins une section d'extrémité de tube (11a, 11b) est refroidie activement au moyen d'une station de refroidissement (16a, 16b).

2. Procédé selon la revendication 1, **caractérisé en ce que** ladite au moins une section d'extrémité de tube (11a, 11b) est refroidie à une température prédéfinie par le refroidissement actif.

3. Procédé selon l'une quelconque des revendications précédentes, **caractérisé en ce que** ladite au moins une station de refroidissement (16a, 16b) pour le refroidissement actif utilise un courant d'agent réfrigérant dirigé.

4. Procédé selon l'une quelconque des revendications précédentes, **caractérisé en ce que** le procédé comprend les étapes suivantes après la préparation de l'ébauche de tube en verre (10) :
a) la détermination de la température de ladite au moins une section d'extrémité de tube (11a, 11b) au moyen d'un capteur,
b) la commande de la station de refroidissement (16a, 16b) sur la base de la température détectée de ladite au moins une section d'extrémité de tube (11a, 11b).

5. Dispositif pour l'usinage d'extrémités de tubes en verre, le dispositif comprenant un appareil de déplacement (12) pour des ébauches de tubes en verre (10) munies d'au moins deux sections d'extrémité de tube (11a, 11b) et au moins un système d'usinage (24a, 24b, 26a, 26b, 28a, 28b, 30) pour l'usinage d'au moins une section d'extrémité de tube (11a, 11b),
l'appareil de déplacement (12) étant conçu pour transporter des ébauches de tubes en verre (10) transversalement dans une direction de déplacement (14),
ledit au moins un système d'usinage (24a, 24b, 26a, 26b, 28a, 28b, 30) étant positionné perpendiculairement à la direction de déplacement (14) à côté de l'appareil de déplacement (12), **caractérisé en ce que**
au moins une station de refroidissement active (16a, 16b) est positionnée dans la direction de déplacement (14) avant ledit au moins un système d'usinage (24a, 24b, 26a, 26b, 28a, 28b, 30) et perpendiculairement à la direction de déplacement (14) à côté de l'appareil de déplacement (12).

6. Dispositif selon la revendication 5, **caractérisé en ce que** ladite au moins une station de refroidissement active (16a, 16b) comprend un dispositif pour la génération d'un courant d'agent réfrigérant dirigé.

7. Dispositif selon la revendication 6, **caractérisé en ce que** le ventilateur comprend une buse à fente, la buse à fente s'étendant parallèlement à la direction de déplacement (14).

8. Dispositif selon la revendication 6, **caractérisé en ce que** le ventilateur comprend au moins deux buses (18), lesdites au moins deux buses (18) étant agencées sur des côtés situés l'un en face de l'autre d'un plan horizontal s'étendant dans la direction de déplacement.

9. Dispositif selon la revendication 6, **caractérisé en ce que** le ventilateur comprend au moins une buse (18) mobile dans la direction de déplacement (14), la station de refroidissement (16a, 16b) comprenant un entraînement, qui est couplé avec ladite au moins une buse (18) et configuré pour mouvoir ladite au moins une buse (18) dans la direction de déplacement (14) et de manière synchrone avec l'appareil de déplacement (12).

10. Dispositif selon l'une quelconque des revendications 5 à 9, **caractérisé en ce que** le dispositif comprend un capteur et une unité de commande, le capteur, l'unité de commande et ladite au moins une station de refroidissement (16a, 16b) étant reliés les uns avec les autres de manière communicative,
le capteur étant conçu pour détecter une température et l'unité de commande étant conçue pour commander ladite au moins une station de refroidissement (16a, 16b) en fonction de la température détectée par le capteur.

11. Dispositif selon l'une quelconque des revendications 5 à 10, **caractérisé en ce que** le système d'usinage comprend une station pour la gravure et le détachement 28a et une station pour la fermeture 24a, la station pour la gravure et le détachement 28a et la station pour la fermeture 24a étant suivies uniquement par exactement une station de brûleur 26a pour un post-usinage thermique.
